(19)

Europäisches Patentamt

European Patent Office

Office européen des brevets

(11) **EP 2 322 916 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(21) Anmeldenummer: **10009921.7**

(22) Anmeldetag: **20.09.2010**

(51) Int Cl.:
$G01N\ 27/406^{(2006.01)}$ $\quad F02D\ 41/14^{(2006.01)}$

(54) **Verfahren zum Verarbeiten eines gemessenen, ohmschen Widerstandes R(t) eines Messelementes mit temperaturabhängigem, ohmschem Widerstand**

Method for processing a measured ohm resistance R(t) of a measuring element with temperature-dependent ohm resistance

Procédé de traitement d'une résistance ohmique mesurée R(t) d'un élément de mesure doté d'une résistance ohmique dépendant de la température

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **14.11.2009 DE 102009053411**

(43) Veröffentlichungstag der Anmeldung:
**18.05.2011 Patentblatt 2011/20**

(73) Patentinhaber: **Volkswagen Aktiengesellschaft 38440 Wolfsburg (DE)**

(72) Erfinder: **Hahn, Hermann Carlton VIC 3053 (AU)**

(56) Entgegenhaltungen:
**EP-A1- 1 028 244 DE-A1- 3 835 852**
**DE-A1- 10 318 648 DE-A1- 19 729 350**
**DE-A1- 19 921 986 US-A1- 2002 003 831**

EP 2 322 916 B1

**Beschreibung**

Die Erfindung betrifft ein Verfahren zum Verarbeiten eines gemessenen, ohmschen Widerstandes R(t) eines Messelementes mit temperaturabhängigem, ohmschem Widerstand, insbesondere Nernstsonde, wobei ein ohmscher Widerstand $R(t_x)$ des Messelementes zum Zeitpunkt $t_x$ gemessen wird und aus mindestens einem physikalischen und/oder chemischen Parameter eines das Messelement umgebenden Gases zum Zeitpunkt $t_x$ der Messung des gemessenen, ohmschen Widerstandes $R(t_x)$ ein Korrekturfaktor $K_\lambda(t_x)$ aus Korrekturfaktoren $K_\lambda$, welche für verschiedene Werte für mindestens einen physikalischen und/oder chemischen Parameter des das Messelement umgebenden Gases vorbestimmt sind, bestimmt wird, wobei ein korrigierter Widerstandswert $R_{korr}(t_x)$ gemäß der Formel

$$R_{korr}(t_x) = R(t_x) \cdot K_\lambda(t_x)$$

bestimmt wird, gemäß dem Oberbegriff des Patentanspruchs 1.

Das Verfahren bezieht sich auf eine Messung eines Widerstandes eines Messelementes, wie beispielsweise einer Sprung-Lambdasonde nach dem Nernst-Prinzip. Den bevorzugten Anwendungsfall stellt ein Verbrennungsmotor dar, in dessen Abgasanlage sich mindestens eine entsprechende Sprung-Lambdasonde befindet, wobei die Ansteuerung der Sprung-Lambdasonde und die Messung der Signale über eine Ansteuereinheit erfolgt. Diese ist beispielsweise in einem Motorsteuergerät integriert.

Zur Erfüllung der gesetzlichen Vorgaben an die zulässigen Abgasemissionen ist eine hohe Wirksamkeit von Abgasreinigungsmaßnahmen notwendig. Eine dieser Maßnahmen ist eine möglichst genaue Einstellung der Abgaszusammensetzung derart, dass ein im Abgassystem befindlicher Katalysator möglichst wirkungsvoll arbeitet. Um bei heutigen Drei-Wege-Katalysatoren eine hohe Konvertierungsleistung zu erreichen, werden diese mit Abgas beaufschlagt, welches eine definierte Abgaszusammensetzung aufweist. Diese Abgaszusammensetzung wird über vor dem Katalysator eingebaute Lambdasonden geregelt.

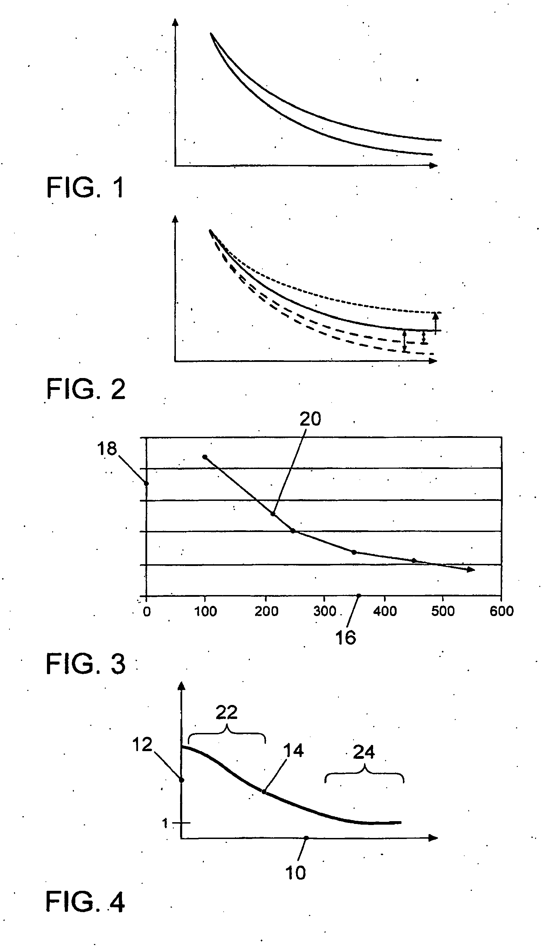

Bei den eingesetzten Lambdasonden unterscheidet man im wesentlichen zwei verschiedene Bauarten. Breitband-Lambdasonden sind in der Lage auch bei Lambda ungleich 1 ein hinreichend genaues Signal zu liefern. Sprung-Lambdasonden nach dem Nernst-Prinzip sind preiswerter als Breitband-Lambdasonden, liefern jedoch nur im Bereich um Lambda = 1 mit hoher Genauigkeit brauchbare Meßwerte. Problematisch ist, dass das Signal, welches die Sonde abgibt, nicht nur von der Abgaszusammensetzung sondern auch von der Temperatur der Sonde abhängt. Bei Ausführungen von nach Stand der Technik bekannten Sprung-Lambdasonden wird in regelmäßigen Abständen von der Ansteuereinheit der Innenwiderstand des Messelementes, bestimmt. Dieser Innenwiderstand des Messelementes. ist logarithmisch umgekehrt proportional zur Temperatur des Elementes, wie in Fig. 1 dargestellt. In Fig. 1 ist auf einer horizontalen Achse eine Temperatur den Sprung-Lambdasonde in °C und auf der vertikalen Achse ein Innenwiderstand der Sprung-Lambdasonde in Ohm aufgetragen. Der Wert des Innenwiderstandes wird beispielsweise dazu verwendet, um zu überwachen, ob sich die Sprung-Lambdasonde in einem bestimmten Temperaturbereich befindet. Sollte das nicht der Fall sein, wird ein Wartungssignal erzeugt. Aus der US 5 129 258 ist es bekannt, auf diese Weiser durch Messung des Innenwiderstandes auf die Abgastemperatur an der Sonde zu schließen.

Aus der DE 100 36 129 A1 ist bekannt, aus dem Innenwiderstand auf die Temperatur der Sprung-Lambdasonde zu schließen und mit dieser Information eine Korrektur des gemessenen Signals vorzunehmen. Des Weiteren ist es beispielsweise aus der DE 100 36 129 A1 bekannt, die Beheizung der Sprung-Lambdasonde derart zu steuern, dass der sondentemperaturabhängige Widerstandswert vorbestimmte Zielwerte annimmt, d.h. die Sonde auf eine vorbestimmte Temperatur eingeregelt wird.

Bei den zuvor beschriebenen Verfahren ist darauf zu achten, dass die genaue Korrelation des gemessenen Widerstandswertes zur Temperatur des Messelementes (Sprung-Lambdasonde) bei verschiedenen Umgebungsbedingungen nicht notwendigerweise identisch ist. Wie aus Fig. 1 ersichtlich, ist der gemessene Wert abhängig vom Lambda-Wert des Abgases, war durch zwei Kurven dargestellt ist, wobei die obere Kurve den Verlauf des Innenwiderstandes in Abhängigkeit von der Temperatur bei fettem Gemisch und die untere Kurve den Verlauf des Innenwiderstandes in Abhängigkeit von der Temperatur bei magerem Gemisch darstellt. Hier ist es üblich, nur gemessene Werte aus vorgegebenen Gemischbereichen weiter zu verarbeiten. Dies schränkt jedoch die Häufigkeit von gültigen Messungen ein. Alternativ wird der Einfluss der Gemischzusammensetzung dadurch korrigiert, dass der gemessene Wert mit einem lambdaabhängigen Korrekturwert beaufschlagt wird, wie beispielsweise aus der gattungsgemäßen EP 1 028 244 A1 bekannt.

Jedoch gibt es noch weitere Einflussfaktoren auf den Zusammenhang zwischen Innenwiderstandswert und Temperatur, wie in Fig. 2 dargestellt. In Fig. 2 ist auf einer horizontalen Achse eine Temperatur der Sprung-Lambdasonde in °C und auf der vertikalen Achse ein Innenwiderstand der Sprung-Lambdasonde in Ohm aufgetragen. Eine Kurve mit durchgezogener Linie veranschaulicht einen Verlauf des Innenwiderstandes von der , Temperatur. Der zuvor beschriebene Einfluss des Abgas-Lambdawertes ist in der Realität nicht konstant, sondern zusätzlich von der Aktivität des Messelementes abhängig, d.h. beispielsweise vom Alterungszustand des Messelementes: Dies ist in Fig. 2 mit den gestrichelten Kurven dargestellt, bei denen sich ein entsprechend veränderter Meßwert ausgehend von der Kurve mit durchgezogener Linie bei verschiedenen Alterungszuständen des Messelementes ergibt. Dies ist mit Doppelpfeilen veranschaulicht. Weiterhin ist nicht nur der Einfluss des Abgas-Lambdawertes alterungsabhängig, sondern auch ein bereits lambdäkorrigierter Innenwiderstandswert unterliegt einer Alterung, d.h:, bei derselben Temperatur erhöht sich üblicherweise der dort gemessene Innenwiderstand mit zunehmender Alterung. Dies ist in Fig. 2 durch die punktierte Kurve dargestellt, die sich ausgehend von der Kurve mit durchgezogener Linie ergibt, wie mit einem Pfeil mit punktierter Linie dargestellt. Eine Korrektur ausschließlich mit einem lambda-abhängigen Korrekturwert lässt daher insbesondere die Alterung des Messelementes unberücksichtigt.

Weiterhin weist der Innenwiderstand zusätzlich eine Abhängigkeit von der Durchwärmung des Messelementes auf, welches ein Sensorelement und einen Sensorkörper aufweist. Durch die Wärmeabfuhr vom Sensorelement zum Sensorkörper ergibt sich im Übergangsbereich eine niedrigere Temperatur. Da der Innenwiderstand aber über das gesamte Element gemessen wird, ergibt sich bei gleicher Temperatur im oberen Bereich des Sondenelementes ein anderer Wert des Innenwiderstandes je nachdem, ob der Sensorkörper kalt oder warm ist, ohne dass dieser Wert jedoch von Einfluss auf die signalrelevante Temperatur an der Elementspitze wäre. Dies ist in Fig. 3 dargestellt, welche einen Innenwiderstand bei konstanter Sensorelementtemperatur darstellt, wobei auf der horizontalen Achse eine "Hex Temperatur" (Temperatur des Sensorkörpers) in °C und auf der vertikalen Achse ein gemessener Widerstandswert $R(t_x)$ in Ohm aufgetragen ist. Ohne dies zu kompensieren, kann daher keine exakte absolute Temperatur aus dem Innenwiderstand berechnet werden.

Das Dokument DE 38 35 852 A1 betrifft eine Verfahren und eine Vorrichtung zur Temperaturbestimmung mit Hilfe des Innenwiderstands einer Lambasonde, in welchen eine rechnerische Korrektur der Abgastemperaturen in Instationärfällen mit einer durch Messungen festgelegter Konstanten vorgenommen wird.

Im Dokument DE 199 21 986 A1 ist eine Widerstandserfassungsvorrichtung für einen Luft/Kraftstoffverhältnissensor beschrieben. Es wird ein Schädigungsparameter als Maß für Alterungsveränderungen des Sensorelements berechnet, mit dessen Hilfe ein Korrekturbetrag für die Sensorimpedanz bestimmt werden kann.

Das Dokument DE 197 29 350 A1 bezieht sich auf eine Vorrichtung und ein Verfahren zum Regeln einer Sauerstoffheizung. Eine Verschlechterung des Sauerstoffsensors wird auf Grundlage einer internen Impedanz bestimmt, so dass eine Sollimpedanz verändert werden kann.

Im Dokument DE 103 18 648 A1 wird ein Verfahren zum Betreiben eines Abgassensors offenbart. Eine Alterungsdrift des Sensorelements wird mittels eines mathematische Modells für den Sollwert des Innenwiderstands berücksichtigt.

Das Dokument US 2002/003831 A1 zeigt einen Temperaturdetektor für einen Abgassensor. Innenwiderstände werden in Funktion der absoluten Temperatur des Abgassensors festgelegt.

Der Erfindung liegt die Aufgabe zugrunde, einen genaueren Zusammenhang zwischen einem gemessenem Widerstandswert $R(t_x)$ und einer tatsächlichen Temperatur eines Messelementes mit temperaturabhängigen, ohmschen Innenwiderstand herzustellen.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in Abhängigkeit von mindestens einem physikalischen und/oder chemischen Parameter des Messelementes eine weitere Korrektur des gemessenen, ohmschen Widerstand $R(t_x)$ des Messelementes bestimmt wird.

Dies hat den Vorteil, dass gemessene Widerstandswerte des Messelementes, welche bei verschiedenen Randbedingungen gemessen werden, korrigiert und in eine absolute Temperatur umgerechnet werden können. Insbesondere bei eine Sprung-Lambdasonde können alle gemessenen Widerstandswerte und nicht nur diejenigen aus einem eingegrenzten Bereich von Randbedingungen, zur genauen Bestimmung einer absoluten Temperatur verwendet werden.

Zum Korrigieren des gemessenen, ohmschen Widerstand $R(t_x)$ einer mit einem Abgas umspülten Messelementes umfasst der mindestens eine physikalische und/oder chemische Parameter des das Messelement umgebenden Gases einen Lambdawert A eines Kraftstoff/Luftverhältnisses.

Eine besonders einfache und gleichzeitig genaue Korrektur des gemessenen, ohmschen Widerstandes des Messelementes erzielt man dadurch, dass der Lambdawert mit dem Messelement selbst bestimmt wird.

Erfindungsgemäß ist das das Messelement umgebende Gas ein Abgas einer Brennkraftmaschine.

Eine besonders genau Bestimmung eines Wertes für den ohmschen Widerstand des Messelementes erzielt man dadurch, dass der mindestens eine physikalischen und/oder chemischer Parameter des Messelementes eine Alterung desselben umfasst.

Eine weitere Verbesserung der Genauigkeit der Bestimmung eines Wertes für den ohmschen Widerstand des Messelementes erzielt man dadurch, dass der mindestens eine physikalischen und/oder chemischer Parameter des Messelementes eine Temperatur eines Sondenkörpers des Messelementes umfasst.

Um einen Einfluss der Durchwärmung des Messelementes zu korrigieren, wird eine Kennlinie hinterlegt, welche eine Abhängigkeit des gemessenen, ohmschen Widerstandes des Messelementes von einer Temperatur des Sondenkörpers des Messelementes enthält. Der gemessene, ohmsche Widerstandes des Messelementes oder eine Korrektur für diesen wird mittels der Kennlinie aus einer Temperatur des Sondenkörpers bestimmt. Die Temperatur des Sondenkörpers wird beispielsweise aus einem Temperaturmodell für das Messelement oder aus einer ermittelten, insbesondere gemessenen, Temperatur eines Bauteils des Messelementes, insbesondere eine Temperatur eines Sechskantes des Messelementes, bestimmt.

Eine Adaption des Gemischeinflusses auf den Wert des Widerstandes des Messelementes erzielt man dadurch, dass ein erster gemessener, ohmscher Widerstand $R(t_1)$ zu einem ersten Zeitpunkt $t_1$ mit einem ersten Korrekturfaktor $K_\lambda(t_1)$ und ein zweiter ohmscher Widerstand $R(t_2)$ zu einem zweiten Zeitpunkt $t_2$ mit einem zweiten Korrekturfaktor $K_\lambda(t_1)$ bestimmt wird, wobei die Zeitpunkte $t_1$ und $t_2$ derart gewählt werden, dass zu beiden Zeitpunkten $t_1$ und $t_2$ eine im Wesentlichen identische Temperatur des Messelementes und unterschiedliche Werte für wenigstens einen physikalischen und/oder chemischen Parameter des das Messelement umgebenden Gases vorliegen, wobei ein Adaptionswert AW gemäß der Formel

$$AW = \frac{R(t_1) - R(t_2)}{\left[ R(t_2) \cdot (K_\lambda(t_2) - 1) - R(t_1) \cdot (K_\lambda(t_1) - 1) \right]}$$

bestimmt wird. Mittels dieses Adaptionswertes AW wird ein kompensierter Widerstandswert $R_{komp}(t_x)$ gemäß der Formel

$$R_{komp}(t_x) = R(t_x) + AW \cdot (R_{korr}(t_x) - R(t_x))$$

bestimmt.

Eine ausgewogene und genaue Adaption erzielt man dadurch, dass aus mindestens zwei bestimmten Adaptionswerten AW ein Mittelwert berechnet und als neuer Adaptionswert $AWg_{emittel}$ für weitere Berechnungen verwendet wird.

Zur genauen Bestimmung einer momentanen Temperatur des Messelementes wird aus dem korrigierten Wi-derstandswert $R_{korr}(t_x)$ bzw. dem kompensierten Widerstandswert $R_{komp}(t_x)$ und aus einer vorbestimmten Zuordnung von Temperaturwerten und Widerstandswerten eine Temperatur $T(t_x)$ des Messelementes für den korrigierten Wider-standswert $R_{korr}(t_x)$ bzw. für den kompensierten Widerstandswert $R_{komp}(t_x)$ bestimmt.

Um die Veränderung der grundsätzlichen, ggf. bereits kompensierten Charakteristik des Widerstandswertes des Messelementes bei Alterung zu erfassen und zu korrigieren, wird eine modellierte Temperatur des Messelementes bestimmt und in Abhängigkeit von dem Vorliegen mindestens einer vorbestimmten Bedingung die modellierte Temperatur dem berechneten korrigierten Widerstandswert $R_{korr}(t_x)$ bzw. dem kompensierten Widerstandswert $R_{komp}(t_x)$ zugeordnet.

Eine weitere Korrektur mit weiter verbesserter Genauigkeit für den gemessenen Widerstandswert erzielt man dadurch, dass eine hinterlegte Grundcharakteristik des Widerstandswertes des Messelementes mittels eines Korrekturwertes derart angepasst wird, dass der berechnete, korrigierte Widerstandswert $R_{korr}(t_x)$ bzw. kompensierte Wider-standswert $R_{komp}(t_x)$ bei der Umrechnung in die Temperatur $T(t_x)$ die modellierte Temperatur ergibt.

Einen besonders guten Abgleich mit der modellierten Temperatur erzielt man dadurch, dass die mindestens eine vorbestimmte Bedingung die Bedingung umfasst, dass der gemessene Widerstandswert $R(t_x)$ in einem vorbe-stimmten Wertebereich von mindestens einem physikalischen und/oder chemischen Parameter des Gases, insbesondere eines Lambdawertes, erfasst wird.

Einen weiter verbesserten Abgleich mit der modellierten Temperatur erzielt man dadurch, dass die mindestens eine vorbestimmte Bedingung die Bedingung umfasst, dass der gemessene Widerstandswert $R(t_x)$ in einem vorbe-stimmten Wertebereich von mindestens einem physikalischen und/oder chemischen Parameter des Messelementes, insbesondere in einem vorbestimmen Wertebereich einer Temperatur eines Sondenkörpers des Messelementes, erfasst wird.

Eine Vereinfachung des Verfahrens durch optionales Weglassen einer Gemischkorrektur erzielt man dadurch, dass der gemessene Widerstandswert $R(t_x)$ in einem vorbestimmten Wertebereich von mindestens einem physikalischen und/oder chemischen Parameter des Gases, insbesondere eines Lambdawertes, erfasst wird.

Eine weitere Vereinfachung des Verfahrens durch optionales Weglassen einer Sondenkörpertemperaturkorrektur erzielt man dadurch, dass der gemessene Widerstandswert $R(t_x)$ in einem vorbestimmten Wertebereich von mindestens einem physikalischen und/oder chemischen Parameter des Messelementes, insbesondere in einem vorbestimmen Wertebereich einer Temperatur eines Sondenkörpers des Messelementes, erfasst wird.

Die Erfindung wird im Folgenden anhand der Zeichnung näher erläutert. Diese zeigt in

Fig. 1 eine graphische Darstellung eines Innenwidersta.nds eines Messelementes mit einem temperaturabhängigen, ohmschen Innenwiderstand bei unterschiedlichen Lambdawerten eines das Messelement umgebenden Gases,

Fig. 2 eine graphische Darstellung eines Innenwiderstands eines Messelementes mit einem temperaturabhängigen, ohmschen Innenwiderstand in Abhängigkeit von einer Temperatur bei unterschiedlichen Alterungszuständen des Messelementes,

Fig. 3 eine graphische Darstellung eines Innenwiderstands eines Messelementes mit einem temperaturabhängigen, ohmschen Innenwiderstand bei konstanter Temperatur eines Sensorelementes des Messelementes und unterschiedlichen Temperaturen eines Sensorkörpers des Messelementes,

Fig. 4 eine graphische Darstellung eines Korrekturwertes in Abhängigkeit von einer elektrischen Spannung eines Messelementes, welche ein Maß für einen Lambdawert eines das Messelement umgebenden Gases ist.

Das erfindungsgemäße Verfahren wird nachfolgend anhand einer Sprung-Lambdasonde nach dem Nernstprinzip für eine Abgasanlage einer Brennkraftmaschine erläutert. Dies ist jedoch lediglich beispielhaft. Aller nachfolgenden Ausführung gelten analog für jedes Messelement, welches einen temperaturabhängigen, ohmschen Widerstand aufweist.

Die Sprung-Lambdasonde, nachfolgend kurz "Sonde" genannt, wird teilweise von einem Abgas in der Abgasanlage der Brennkraftmaschine umspült. Bei der Messung eines Widerstandswertes $R(t_x)$ zum Zeitpunkt $t_x$ der Sonde wird gleichzeitig ein Lambdawert $\lambda(t_x)$ des Abgases, welcher ein Kraftstoff/Luftverhältnis repräsentiert, zu Zeitpunkt $t_x$ der Messung des Widerstandswertes $R(t_x)$ bestimmt. Diese Bestimmung des Lambdawert $\lambda(t_x)$ erfolgt bevorzugt mit der Sonde selbst. Aus dem Lambdawert $\lambda(t_x)$ wird ein Korrekturfaktor $K_\lambda(t_x)$ bestimmt und mittels dieses Korrekturfaktors ein korrigierter Widerstandswert $R_{korr}(t_x)$ gemäß der Formel

$$R_{korr}(t_x) = R(t_x) \cdot K_\lambda(t_x) \qquad (1)$$

berechnet.

Für die Sonde wurde zuvor der Einfluss des Lambdawertes $\lambda$ ermittelt und in einer Kennlinie als Korrekturwert $K_\lambda(t_x)$ hinterlegt. Diese Kennlinie enthält dementsprechend zu jedem Lambdawert $\lambda$ einen Korrekturwert $K_\lambda$. Bevorzugt wird hierbei nicht ein motorisch berechneter Lambdawert $\lambda$, sondern das Signal der Sonde direkt, d.h. der von der Sonde gemessene Lambdawert $\lambda$ verwendet. Durch Anwendung einer solchen Kennlinie für die Korrekturwerte $K_\lambda$ ergibt sich bei einer bestimmten Temperatur unabhängig vom Gemischzustand des Abgases immer derselbe korrigierte Widerstandswert $R_{korr}(t_x)$. Ein Beispiel für eine derartige Kennlinie ist in Fig. 4 dargestellt. Auf einer horizontalen Achse 10 ist eine Sondenspannung aufgetragen, die jeweils einen bestimmten Lambdawert $\lambda$ des die Sonde umspülenden Abgases repräsentiert. Auf der vertikalen Achse 12 ist ein Korrekturwert $K_\lambda$ aufgetragen. Eine Kennlinie 14 veranschaulicht einen Verlauf des Korrekturwertes $K_\lambda$ über den Lambdawert $\lambda$ des Abgases. Mit22 ist ein magerer Gemischbereich und mit 24 ist ein fetter Gemischbereich bezeichnet.

Um zusätzlich eine alterungsbedingte Änderung der zuvor erläuterten Kennlinie 14 zu erfassen, werden zwei verschiedene Widerstandswerte $R(t_1)$ und $R(t_2)$ gemessen. Diese beiden Messungen werden zeitlich schnell, innerhalb einer vorgegebenen Zeitspanne, aufeinander folgende ausgeführt, um davon ausgehen zu können, dass die Temperatur der Sonde in beiden Messungen dieselbe war. Des Weiteren werden die Zeitpunkte $t_1$ und $t_2$ derart gewählt, dass das Signal der Sonde für den Lambdawert $\lambda$ beider Messungen mindestens um ein vorbestimmtes Maß derart unterschiedlich ist, dass eine der Messungen bei einem Gemisch mit Luftüberschuss und die andere Messung bei einem Gemisch mit Luftmangel erfolgt. Aus den beiden Messwerten kann nun ein Adaptionswert AW bestimmt werden. In einer bevorzugten Ausführungsform wird die Kompensation der alterungsbedingten Änderung des Gemischeinflusses über folgende Gleichung durchgeführt.

$$R_{komp}(t_x) = R(t_x) + AW \cdot (R_{korr}(t_x) - R(t_x)) \qquad (2)$$

Durch Einsetzen von (1) in (2) erhält man Folgendes.

$$R_{komp}(t_x) = R(t_x)[(K_\lambda(t_x) - 1 \cdot AW + 1] \qquad (3)$$

Für die beiden zuvor genannten Messungen muss nun folgendes gelten.

$$R_{komp}(t_1) = R_{komp}(t_2) \qquad (4)$$

Durch Einsetzen von (2) bzw. (3) in (4) ergeben sich folgende Gleichungen.

$$R(t_1) + AW \cdot (R_{korr}(t_1) - R(t_1) = R(t_2) + AW \cdot (R_{korr}(t_2) - R(t_2)) \qquad (5)$$

$$R(t_1)[(K_\lambda(t_1) - 1 \cdot AW + 1] = R(t_1)[(K_\lambda(t_1) - 1 \cdot AW + 1] \qquad (6)$$

Durch entsprechendes Umstellen der Gleichung (6) ergibt sich folgende Berechnungsformel für den Adaptionswert AW.

$$AW = \frac{R(t_1) - R(t_2)}{R(t_2) \cdot (K_\lambda(t_2) - 1) - R(t_1) \cdot (K_\lambda(t_1) - 1)} \qquad (7)$$

Bevorzugt werden die dergestalt ermittelten Adaptionswerte einer Mittelwertbildung unterzogen.

Die Sonde umfasst einen Sondenkörper und ein Sondenelement. Zur zusätzlichen Sondenkörpertemperatur-Korrektur wird folgendermaßen vorgegangen. Der Einfluss der Durchwärmung der Sonde wird korrigiert, indem die in Fig. 3 dargestellte Charakteristik ermittelt und in einer Kennlinie hinterlegt wird. In Fig. 3 ist auf einer horizontalen Achse 16 eine Temperatur des Sondenkörpers ("Hex Temperatur") in °C aufgetragen und auf einer vertikalen Achse 18 ist ein gemessener Widerstandswert $R(t_x)$ bei konstanter Temperatur des Sondenelementes in Ohm aufgetragen. Eine Kennlinie 20 zeigt den Verlauf des gemessenen Widerstandswertes $R(t_x)$ bei konstanter Temperatur des Sondenelementes über die Temperatur des Sondenkörpers. Es wird eine repräsentative Sondenkörpertemperatur ermittelt. In einer bevorzugten Ausführung wird zur Ermittlung einer repräsentativen Sondenkörpertemperatur ein Temperaturmodell des Sensors verwendet. Weiterhin wird in einer bevorzugten Ausführung als repräsentative Sondenkörpertemperatur eine ermittelte Sechskanttemperatur der Sonde verwendet.

Für eine Alterungskorrektur wird folgendermaßen vorgegangen. Um die Veränderung der grundsätzlichen, ggf. bereits gemischkorrigierten Charakteristik des gemessenen Widerstandswertes $R(t_x)$ (Innenwiderstandes) bei Alterung zu erfassen und zu korrigieren wird eine modellierte Temperatur des Sensorelementes als Referenz verwendet. Weiterhin werden Bedingungen definiert, bei deren Vorliegen von einer hohen Genauigkeit der modellierten Sensorelementtemperatur ausgegangen wird. Liegen diese Bedingungen vor, wird die modellierte Elementtemperatur einem aktuellen Wert des gemessenen Widerstandswertes $R(t_x)$ zugeordnet. In einer bevorzugten Ausführungsform wird eine hinterlegte Grundcharakteristik des gemessenen Widerstandswertes $R(t_x)$ des Sensors anhand eines Korrekturwertes so angepasst, dass sich aus dem aktuell gemessenen Widerstandwertes $R(t_x)$ die aktuelle modellierte Sensorelementtemperatur ergibt. In einer bevorzugten Ausführungsform wird die Sensorelementtemperatur mittels eines Temperaturmodells des Sensors ermittelt. In einer weiteren Ausführungsform wird der sondenkörpertemperaturkorrigierte Widerstandswert des Sensors für diesen Abgleich verwendet. In einer weiteren Ausführungsform wird der gemischkorrigierte und sondenkörpertemperaturkorrigierte Widerstandswert des Sensors für diesen Abgleich verwendet. In einer weiteren Ausführungsform wird der Abgieich nur mit Innenwiderstandswerten durchgeführt, welche in einem bestimmten Lambda- bzw. Signalbereich des Gemisches liegen, so dass auf eine Gemischkorrektur verzichtet werden kann. In einer weiteren Ausführungsform wird der Abgleich nur mit Widerstandswert des Sensors durchgeführt, welche in einem bestimmten Bereich der Sondenkörpertemperatur ermittelt wurden, so dass auf eine Sondenkörpertemperaturkorrektur verzichtet werden kann.

Durch Anwendung der beschriebenen Korrekturverfahren können nunmehr alle gemessenen Widerstandswerte des Sensors (Innenwiderstandswerte) in eine konkrete, absolute Sensorelementtemperatur umgerechnet werden. In einer weiteren Anwendung wird diese, aus dem Innenwiderstand mit mindestens einem der drei zuvor genannten Korrekturverfahren berechnete Sensorelementtemperatur dazu verwendet, um die Sonde auf eine vordefinierte Zieltemperatur einzuregeln. Dazu wird die Differenz zwischen der Zieltemperatur und der aus dem korrigierten Innenwiderstand berechneten Sensorelementtemperatur dazu benutzt, um das Heizelement des Sensors mit einer entsprechenden Einstellung zu beaufschlagen, welche die Elementtemperatur möglichst genau auf der Zieltemperatur hält. Bevorzugt geschieht dies in einem geschlossenen Regelkreis.

**Bezugszeichenliste**

10    horizontale Achse: Sondenspannung
12    vertikale Achse: Korrekturwert $K_\lambda$
14    Kennlinie für $K_\lambda$ über Sondenspannung
16    horizontale Achse: Temperatur des Sondenkörpers ("Hex Temperatur") in °C
18    vertikale Achse: gemessener Widerstandswert $R(t_x)$ bei konstanter Temperatur des Sondenelementes in Ohm
20    Kennlinie: Verlauf des gemessenen Widerstandswertes $R(t_x)$ bei konstanter Temperatur des Sondenelementes über die Temperatur des Sondenkörpers
22    magerer Gemischbereich
24    fetter Gemischbereich

**Patentansprüche**

1. Verfahren zum Verarbeiten eines gemessenen, ohmschen Widerstandes R(t) eines Messelementes mit temperaturabhängigem, ohmschem Widerstand einer Sprung-Lamdasonde nach dem Nernstprinzip, wobei ein ohmscher Widerstand $R(t_x)$ des Messelementes zum Zeitpunkt $t_x$ gemessen wird und aus mindestens einem lambdawert eines Kraftstoff/Luftverhältnisses eines das Messelement umgebenden Gases zum Zeitpunkt $t_x$ der Messung des gemessenen, ohmschen Widerstandes $R(t_x)$ ein Korrekturfaktor $K_\lambda(t_x)$ aus Korrekturfaktoren $K_\lambda$, welche für verschiedene Werte für mindestens einen Lambdawert eines Kraftstoff/Luftverhältnisses des das Meßelement umgebenden Gases vorbestimmt sind, bestimmt wird, wobei ein korrigierter Widerstandswert $R_{korr}(t_x)$ gemäß der Formel

$$R_{korr}(t_x) = R(t_x) \cdot K_\lambda(t_x)$$

bestimmt wird, **dadurch gekennzeichnet, dass** in Abhängigkeit von mindestens einem physikalischen und/oder chemischen Parameter des Messelementes, eine weitere Korrektur des gemessenen, ohmschen Widerstand $R(t_x)$ des Messelementes bestimmt wird, wobei das das Messelement umgebende Gas ein Abgas einer Brennkraftmaschine ist.

2. Verfahren nach Anspruch 1, **dadurch gekennzeichnet, dass** der Lambdawert mit dem Messelement selbst bestimmt wird.

3. Verfahren nach mindestens einem der vorhergehenden Ansprüche, **dadurch gekennzeichnet, dass** der mindestens eine physikalischen und/oder chemischen Parameter des Messelementes eine Alterung desselben umfasst.

4. Verfahren nach mindestens einem der vorhergehenden Ansprüche, **dadurch gekennzeichnet, dass** der mindestens eine physikalischen und/oder chemischen Parameter des Messelementes eine Temperatur eines Sondenkörpers des Messelementes umfasst.

5. Verfahren nach Anspruch 4, **dadurch gekennzeichnet, dass** eine Kennlinie hinterlegt wird, welche eine Abhängigkeit des gemessenen, ohmschen Widerstandes des Messelementes von einer Temperatur des Sondenkörpers des Messelementes enthält.

6. Verfahren nach Anspruch 5, **dadurch gekennzeichnet, dass** der gemessene, ohmsche Widerstandes des Messelementes oder eine Korrektur für diesen aus einer Temperatur des Sondenkörpers mittels der Kennlinie bestimmt wird.

7. Verfahren nach Anspruch 6, **dadurch gekennzeichnet, dass** die Temperatur des Sondenkörpers aus einem Temperaturmodell für das Messelement oder aus einer ermittelten; insbesondere gemessenen, Temperatur eines Bauteils des Messelementes, insbesondere eine Temperatur eines Sechskantes des Messelementes, bestimmt wird.

8. Verfahren nach mindestens einem der vorhergehenden Ansprüche, **dadurch gekennzeichnet, dass** ein erster gemessener, ohmscher Widerstand $R(t_1)$ zu einem ersten Zeitpunkt $t_1$ mit einem ersten Korrekturfaktor $K_\lambda(t_1)$ und ein zweiter ohmscher Widerstand $R(t_2)$ zu einem zweiten Zeitpunkt $t_2$ mit einem zweiten Korrekturfaktor $K_\lambda(t_1)$ bestimmt wird, wobei die Zeitpunkte $t_1$ und $t_2$ derart gewählt werden, dass zu beiden Zeitpunkten $t_1$ und $t_2$ eine im Wesentlichen identische Temperatur des Messelementes und unterschiedliche Werte für wenigstens einen physikalischen und/oder chemischen Parameter des das Messelement umgebenden Gases vorliegen, wobei ein Adaptionswert AW gemäß der Formel

$$AW = \frac{R(t_1) - R(t_2)}{[R(t_2) \cdot (K_\lambda(t_2) - 1) - R(t_1) \cdot (K_\lambda(t_1) - 1)]}$$

bestimmt wird.

9. Verfahren nach Anspruch 8, **dadurch gekennzeichnet, dass** aus mindestens zwei bestimmten Adaptionswerten AW ein Mittelwert berechnet und als neuer Adaptionswert $AWg_{emittel}$ für weitere Berechnungen verwendet wird.

10. Verfahren nach Anspruch 8 oder 9, **dadurch gekennzeichnet, dass** ein kompensierter Widerstandswert $R_{komp}(t_x)$ gemäß der Formel

$$R_{komp}(t_x) = R(t_x) + AW \cdot (R_{korr}(t_x) - R(t_x))$$

bestimmt wird.

11. Verfahren nach mindestens einem der Ansprüche 1 bis 9, **dadurch gekennzeichnet, dass** aus dem korrigierten Widerstandswert $R_{korr}(t_x)$ und aus einer vorbestimmten Zuordnung von Temperaturwerten und Widerstandswerten eine Temperatur $T(t_x)$ des Messelementes für den korrigierten Widerstandswert $R_{korr}(t)$ bestimmt wird.

12. Verfahren nach Anspruch 10, **dadurch gekennzeichnet, dass** aus dem kompensierten Widerstandswert $R_{Komp}(t_x)$ und aus einer vorbestimmten Zuordnung von Temperaturwerten und Widerstandswerten eine Temperatur $T(t_x)$ des Messelementes für den kompensierten Widerstandswert $R_{komp}(t)$ bestimmt wird.

13. Verfahren nach mindestens einem der Ansprüche 1 bis 9 oder 11, **dadurch gekennzeichnet, dass** eine modellierte Temperatur des Messelementes bestimmt wird und in Abhängigkeit von dem Vorliegen mindestens einer vorbestimmten Bedingung die modellierte Temperatur dem berechneten korrigierten Widerstandswert $R_{korr}(t_x)$ zugeordnet wird.

14. Verfahren nach Anspruch 10 oder 12, **dadurch gekennzeichnet, dass** eine modellierte Temperatur des Messelementes bestimmt wird und in Abhängigkeit von dem Vorliegen mindestens einer vorbestimmten Bedingung die modellierte Temperatur dem berechneten kompensierten Widerstandswert $R_{komp}(t_x)$ zugeordnet wird.

15. Verfahren nach Anspruch 11 und 13, **dadurch gekennzeichnet, dass** eine hinterlegte Grundcharakteristik des Widerstandswertes des Messelementes mittels eines Korrekturwertes derart angepasst wird, dass der berechnete, korrigierte Widerstandswert $R_{korr}(t_x)$ bei der Umrechnung in die Temperatur $T(t_x)$ die modellierte Temperatur ergibt.

16. Verfahren nach Anspruch 12 und 14, **dadurch gekennzeichnet, dass** eine hinterlegte Grundcharakteristik des Widerstandswertes, des Messelementes mittels eines Korrekturwertes derart angepasst wird, dass der berechnete, kompensierte Widerstandswert $R_{komp}(t_x)$ bei der Umrechnung in die Temperatur $T(t_x)$ die modellierte Temperatur ergibt.

17. Verfahren nach mindestens einem der Ansprüche 13 bis 16, **dadurch gekennzeichnet, dass** die mindestens eine vorbestimmte Bedingung die Bedingung umfasst, dass der gemessene Widerstandswert $R(t_x)$ in einem vorbestimmten Wertebereich von mindestens einem physikalischen und/oder chemischen Parameter des Gases, insbesondere eines Lambdawertes, erfasst wird.

18. Verfahren nach mindestens einem der Ansprüche 13 bis 17, **dadurch gekennzeichnet, dass** die mindestens eine vorbestimmte Bedingung die Bedingung umfasst, dass der gemessene Widerstandswert $R(t_x)$ in einem vorbestimmten Wertebereich von mindestens einem physikalischen und/oder chemischen Parameter des Messelementes, insbesondere in einem vorbestimmen Wertebereich einer Temperatur eines Sondenkörpers des Messelementes, erfasst wird.

19. Verfahren nach mindestens einem der Ansprüche 1 bis 18, **dadurch gekennzeichnet, dass** der gemessene Widerstandswert $R(t_x)$ in einem vorbestimmten Wertebereich von mindestens einem physikalischen und/oder chemischen Parameter des Gases, insbesondere eines Lambdawertes, erfasst wird.

20. Verfahren nach mindestens einem der Ansprüche 1 bis 16, **dadurch gekennzeichnet, dass** der gemessene Widerstandswert $R(t_x)$ in einem vorbestimmten Wertebereich von mindestens einem physikalischen und/oder chemischen Parameter des Messelementes, insbesondere in einem vorbestimmen Wertebereich einer Temperatur eines Sondenkörpers des Messelementes, erfasst wird.

**Claims**

1. Method for processing a measured, ohmic resistance $R(t)$ of a measuring element with temperature-dependent ohmic resistance of a jump lambda probe employing the Nernst principle, an ohmic resistance $R(t_x)$ of the measuring element being measured at the instant $t_x$, and there being determined from at least one lambda value of a fuel/air ratio of a gas surrounding the measuring element at the instant $t_x$ of the measurement of the measured, ohmic resistance $R(t_x)$ a correction factor $K_\lambda(t_x)$ comprising correction factors $K_\lambda$ which are predetermined for various values for at least one lambda value of a fuel/air ratio of the gas surrounding the measuring element, a corrected resistance value $R_{korr}(t_x)$ being determined in accordance with the formula

$$R_{korr}(t_x) = R(t_x) \cdot K_\lambda(t_x)$$

,

**characterized in that** a further correction of the measured, ohmic resistance $R(t_x)$ of the measuring element is determined as a function of at least one physical and/or chemical parameter of the measuring element, the gas surrounding the measuring element being an exhaust gas of an internal combustion engine.

2. Method according to Claim 1, **characterized in that** the lambda value is determined by using the measuring element itself.

3. Method according to at least one of the preceding claims, **characterized in that** the at least one physical and/or chemical parameter of the measuring element comprises an ageing of the same.

4. Method according to at least one of the preceding claims, **characterized in that** the at least one physical and/or chemical parameter of the measuring element comprises a temperature of a probe body of the measuring element.

5. Method according to Claim 4, **characterized in that** a characteristic curve is stored which includes a functional relationship between the measured, ohmic resistance of the measuring element and a temperature of the probe body of the measuring element.

6. Method according to Claim 5, **characterized in that** the measured, ohmic resistance of the measuring element, or a correction for this is determined from a temperature of the probe body by means of the characteristic curve.

7. Method according to Claim 6, **characterized in that** the temperature of the probe body is determined from a temperature model for the measuring element, or from a determined, in particular measured, temperature of a component of the measuring element, in particular a temperature of a hexagon of the measuring element.

8. Method according to at least one of the preceding claims, **characterized in that** a first measured, ohmic resistance $R(t_1)$ is determined at a first instant $t_1$ by using a first correction factor $K_\lambda(t_1)$ and a second ohmic resistance $R(t_2)$ is determined at a second instant $t_2$ by using a second correction factor $K_\lambda(t_1)$, the instants $t_1$ and $t_2$ being selected in such a way that at both instants $t_1$ and $t_2$ a temperature of the measuring element is substantially identical and there are different values for at least one physical and/or chemical parameter of the gas surrounding the measuring element, an adaptation value AW being determined in accordance with the formula

$$AW = \frac{R(t_1) - R(t_2)}{\left[ R(t_2) \cdot (K_\lambda(t_2) - 1) - R(t_1) \cdot (K_\lambda(t_1) - 1) \right]}$$

9. Method according to Claim 8, **characterized in that** a mean value is calculated from at least two determined adaptation values AW, and is used as new adaptation value $AW_{gemittel}$ for further calculations.

10. Method according to Claim 8 or 9, **characterized in that** a compensated resistance, value $R_{komp}(t_x)$ is determined in accordance with the formula

$$R_{komp}(t_x) = R(t_x) + AW \cdot (R_{korr}(t_x) - R(t_x))$$

11. Method according to at least one of Claims 1 to 9, **characterized in that** a temperature $T(t_x)$ of the measuring element is determined for the corrected resistance value $R_{korr}(t)$ from the corrected resistance value $R_{korr}(t_x)$ and from a predetermined assignment of temperature values and resistance values.

12. Method according to Claim 10, **characterized in that** a temperature $T(t_x)$ of the measuring element is determined for the compensated resistance value $R_{komp}(t)$ from the compensated resistance value $R_{komp}(t_x)$ from a predetermined assignment of temperature values and resistance values.

13. Method according to at least one of Claims 1 to 9 or 11, **characterized in that** a modelled temperature of the measuring element is determined, and the modelled temperature is assigned to the calculated, corrected resistance value $R_{korr}(t_x)$ as a function of the occurrence of at least one predetermined condition.

14. Method according to Claim 10 or 12, **characterized in that** a modelled temperature of the measuring element is determined, and the modelled temperature is assigned to the calculated, compensated resistance value $R_{komp}(t_x)$ as a function of the occurrence of at least one predetermined condition.

15. Method, according to Claims 11 and 13, **characterized in that** a stored basic characteristic of the resistance value of the measuring element is adjusted by means of a correction value in such a way that the calculated, corrected resistance value $R_{korr}(t_x)$ yields the modelled temperature upon the conversion into the temperature $T(t_x)$.

16. Method according to Claims 12 and 14, **characterized in that** a stored basic characteristic of the resistance value of the measuring element is adjusted by means of a correction value in such a way that the calculated, compensated resistance value $R_{komp}(t_x)$ yields the modelled temperature upon the conversion into the temperature $T(t_x)$.

17. Method according to at least one of Claims 13 to 16, **characterized in that** the at least one predetermined condition comprises the condition that the measured resistance value $R(t_x)$ is detected in a predetermined value range of at least one physical and/or chemical parameter of the gas, in particular a lambda value.

18. Method according to at least one of Claims 13 to 17, **characterized in that** the at least one predetermined condition comprises the condition that the measured resistance value $R(t_x)$ is detected in a predetermined value range of at least one physical and/or chemical parameter of the measuring element, in particular in a predetermined value range of a temperature of a probe body of the measuring element.

19. Method according to at least one of Claims 1 to 18, **characterized in that** the measured resistance value $R(t_x)$ is detected in a predetermined value range of at least one physical and/or chemical parameter of the gas, in particular a lambda value.

20. Method according to at least one of Claims 1 to 16, **characterized in that** the measured resistance value $R(t_x)$ is detected in a predetermined value range of at least one physical and/or chemical parameter of the measuring element, in particular in a predetermined value range of a temperature of a probe body of the measuring element.

**Revendications**

1. Procédé de traitement d'une résistance ohmique $R(t)$ mesurée d'un élément de mesure ayant une résistance ohmique dépendante de la température d'une sonde Lambda selon le principe de Nernst, une résistance ohmique $R(t_x)$ de l'élément de mesure étant mesurée à l'instant $t_x$ et un facteur de correction $K_\lambda(t_x)$ étant déterminé à partir d'au moins une valeur Lambda d'un mélange carburant/air d'un gaz qui entoure l'élément de mesure à l'instant $t_x$ de la mesure de la résistance ohmique $R(t_x)$ mesurée parmi les facteur de correction $K_\lambda$ qui sont prédéfinis pour différentes, valeurs pour au moins une valeur Lambda d'un mélange carburant/air du gaz qui entoure l'élément de mesure, une valeur de résistance corrigée $R_{korr}(t_x)$ étant déterminée conformément à la formule

$$R_{korr}(t_x) = R(t_x) \cdot K_\lambda(t_x),$$

**caractérisé en ce qu'**une correction supplémentaire de la résistance ohmique $R(t_x)$ mesurée de l'élément de mesure est déterminée en fonction d'au moins un paramètre physique et/ou chimique de l'élément de mesure, le gaz qui entoure l'élément de mesure étant les gaz d'échappement d'un moteur à combustion interne.

2. Procédé selon la revendication 1, **caractérisé en ce que** la valeur Lambda est déterminée avec l'élément de mesure lui-même.

3. Procédé selon au moins l'une des revendications précédentes, **caractérisé en ce que** l'au moins un paramètre physique et/ou chimique de l'élément de mesure comprend un vieillissement de celui-ci.

4. Procédé selon au moins l'une des revendications précédentes, **caractérisé en ce que** l'au moins un paramètre physique et/ou chimique de l'élément de mesure comprend une température d'un corps de sonde de l'élément de mesure.

5. Procédé selon la revendication 4, **caractérisé en ce qu'**une courbe caractéristique est mise en mémoire, laquelle contient une dépendance de la résistance ohmique mesurée de l'élément de mesure à une température du corps de sonde de l'élément de mesure.

6. Procédé selon la revendication 5, **caractérisé en ce que** la résistance ohmique mesurée de l'élément de mesure ou une correction pour celle-ci est déterminée à partir d'une température du corps de sonde au moyen de la courbe caractéristique.

7. Procédé selon la revendication 6, **caractérisé en ce que** la température du corps de sonde est déterminée à partir d'un modèle de température pour l'élément de mesure ou à partir d'une température déterminée, notamment mesurée, d'un composant de l'élément de mesure, notamment une température d'un hexagone de l'élément de mesure.

8. Procédé selon au moins l'une des revendications précédentes, **caractérisé en ce qu'**une première résistance ohmique $R(t_1)$ mesurée est déterminée à un premier instant $t_1$ avec un premier facteur de correction $K_\lambda(t_1)$ et une deuxième résistance ohmique $R(t_2)$ mesurée est déterminée à un deuxième instant $t_2$ avec un deuxième facteur de correction $K_\lambda(t_1)$, les instants $t_1$ et $t_2$ étant choisis de telle sorte qu'une température sensiblement identique de l'élément de mesure et des valeurs différentes pour au moins un paramètre physique et/ou chimique du gaz qui entoure l'élément de mesure sont présentes aux deux instants $t_1$ et $t_2$, une valeur d'adaptation AW selon la formule

$$AW = \frac{R(t_1) - R(t_2)}{[R(t_2) \cdot (K_\lambda(t_2) - 1) - R(t_1) \cdot (K_\lambda(t_1) - 1)]}$$

étant déterminée.

9. Procédé selon la revendication 8, **caractérisé en ce qu'**une valeur moyenne est calculée à partir d'au moins deux valeurs d'adaptation AW déterminées et utilisée en tant que nouvelle valeur d'adaptation $AWg_{emittel}$ pour les calculs supplémentaires.

10. Procédé selon la revendication 8 ou 9, **caractérisé en ce qu'**une valeur de résistance compensée $R_{komp}(t_x)$ selon la formule

$$R_{komp}(t_x) = R(t_x) + AW \cdot (R_{korr}(t_x) - R(t_x))$$

est déterminée.

11. Procédé selon au moins l'une des revendications 1 à 9, **caractérisé en ce qu'**une température $T(t_x)$ de l'élément de mesure pour la valeur de résistance corrigée $R_{korr}(t_x)$ est déterminée à partir de la valeur de résistance corrigée $R_{korr}(t_x)$ et à partir d'une association prédéfinie de valeurs de température et de valeurs de résistance.

12. Procédé selon la revendication 10, **caractérisé en ce qu'**une température $T(t_x)$ de l'élément de mesure pour la valeur de résistance compensée $R_{komp}(t_x)$ est déterminée à partir de la valeur de résistance compensée $R_{komp}(t_x)$ et à partir d'une association prédéfinie de valeurs de température et de valeurs de résistance.

13. Procédé selon au moins l'une des revendications 1 à 9 ou 11, **caractérisé en ce qu'**une température modélisée de l'élément de mesure est déterminée et, en fonction de la présence d'au moins une fonction prédéfinie, la température modélisée est associée à la valeur de résistance corrigée $R_{korr}(t_x)$ calculée.

14. Procédé selon la revendication 10 ou 12, **caractérisé en ce qu'**une température modélisée de l'élément de mesure est déterminée et, en fonction de la présence d'au moins une fonction prédéfinie, la température modélisée est associée à la valeur de résistance compensée $R_{kom}p(t_x)$ calculée.

15. Procédé selon les revendications 11 et 13, **caractérisé en ce qu'**une caractéristique de base mise en mémoire de la valeur de résistance de l'élément de mesure est adaptée au moyen d'une valeur de correction de telle sorte que la valeur de résistance corrigée $R_{korr}(t_x)$ calculée produise la température modélisée lors de la conversion en la température $T(t_x)$.

16. Procédé selon les revendications 12 et 14, **caractérisé en ce qu'**une caractéristique de base mise en mémoire de la valeur de résistance de l'élément de mesure est adaptée au moyen d'une valeur de correction de telle sorte que la valeur de résistance compensée $R_{kom}p(t_x)$ calculée produise la température modélisée lors de la conversion en la température $T(t_x)$.

17. Procédé selon au moins l'une des revendications 13 à 16, **caractérisé en ce que** l'au moins une condition prédéfinie comprend le fait que la valeur de résistance $R(t_x)$ mesurée est acquise dans une plage de valeurs prédéfinie d'au moins un paramètre physique et/ou chimique du gaz, notamment d'une valeur,Lambda.

18. Procédé selon au moins l'une des revendications 13 à 17, **caractérisé en ce que** l'au moins une condition prédéfinie comprend le fait que la valeur de résistance $R(t_x)$ mesurée est acquise dans une plage de valeurs prédéfinie d'au moins un paramètre physique et/ou chimique de l'élément de mesure, notamment dans une plage de valeurs prédéfinie d'une température d'un corps de sonde de l'élément de mesure.

19. Procédé selon au moins l'une des revendications 1 à 18, **caractérisé en ce que** la valeur de résistance $R(t_x)$ mesurée est acquise dans une plage de valeurs prédéfinie d'au moins un paramètre physique et/ou chimique du gaz, notamment d'une valeur Lambda.

20. Procédé selon au moins l'une des revendications 1 à 16, **caractérisé en ce que** la valeur de résistance $R(t_x)$ mesurée est acquise dans une plage de valeurs prédéfinie d'au moins un paramètre physique et/ou chimique de l'élément de mesure, notamment dans une plage de valeurs prédéfinie d'une, température d'un corps de sonde de l'élément de mesure.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5129258 A
- DE 10036129 A1
- EP 1028244 A1
- DE 3835852 A1
- DE 19921986 A1
- DE 19729350 A1
- DE 10318648 A1
- US 2002003831 A1